# EUROPÄISCHE PATENTSCHRIFT

(11) **EP 2 979 535 B1**
(45) Veröffentlichungstag und Bekanntmachung des Hinweises auf die Patenterteilung: **19.09.2018**
(21) Anmeldenummer: 15002059.2
(22) Anmeldetag: 09.07.2015
(51) Int. Cl.: A01D 90/04, A01F 15/10

(54) **SCHNEIDEINRICHTUNG FÜR LANDWIRTSCHAFTLICHE ERNTEMASCHINEN**
CUTTING DEVICE FOR AGRICULTURAL HARVESTERS
DISPOSITIF DE COUPE POUR MOISSONNEUSES AGRICOLES

(30) Priorität: 30.07.2014 DE 202014006083 U
(43) Veröffentlichungstag der Anmeldung: 03.02.2016
(73) Patentinhaber: Maschinenfabrik Bernard Krone GmbH, 48480 Spelle (DE)
(72) Erfinder: Meiners, Michael, 49832 Beesten (DE)

(56) Entgegenhaltungen:
- EP-A1- 2 110 014
- EP-A1- 2 656 725
- DE-A1- 19 832 463
- DE-C1- 3 213 199

## Beschreibung

Die Erfindung betrifft eine Schneideinrichtung für landwirtschaftliche Erntemaschinen wie beispielsweise Ladewagen oder Ballenpressen zur Ernte von landwirtschaftlichem Halm- oder Blattgut wie Gras oder Heu nach dem Oberbegriff des Anspruches 1. Solche Schneideinrichtungen sind aus der Praxis in vielfältigen Ausführungen bekannt und umfassen im Wesentlichen ein um eine horizontale Achse rotierend angetriebenes und mit Förderzinken versehenes Förderorgan, welches mit in einen Förderkanal hineinragenden Schneidmessern zusammenwirkt, um das von einer Aufnahmevorrichtung aufgenommene Halm- oder Blattgut zu schneiden und es dann einem nachgeordneten Laderaum zuzuführen. Insbesondere bei Ballenpressen zur Herstellung von runden oder quaderförmigen Erntegutballen steht zum Einbau derartiger Schneideinrichtungen nur ein begrenzter Einbauraum zur Verfügung.

In der DE 31 41 414 A1 ist eine Schneideinrichtung für einen Selbstladewagen offenbart, bei der jedes Messer über einen federnd nachgiebigen Messerhebel in der Schneidstellung abgestützt ist und somit einem Stein oder dgl. Fremdkörper selbsttätig ausweichen kann. Die Messerhebel sind in etwa der Mitte an einem feststehenden Bolzen gelagert, wobei der dem Messer zugewandte Abschnitt mit einer daran angebrachten Messerrolle in eine Vertiefung am Rücken der Messer eingreift und der andere Abschnitt sich mit Kurvenscheiben einer den Messerhebeln nachgeordneten Schaltwelle in Eingriff befindet. Für jeden Messerhebel und damit für jedes Messer ist eine Kurvenscheibe vorgesehen, wobei die Kurvenscheiben so versetzt zueinander am Umfang der Schaltwelle angebracht sind, dass entweder alle, eine bestimmte Anzahl oder keiner der Messerhebel mit einer Kurvenscheibe zur Verstellung der Schnittlänge der Schneideinrichtung in Eingriff stehen. Diese Schneideinrichtung ist insbesondere mit dem Mangel behaftet, dass zur Betätigung der Schaltwelle und damit zur Verstellung der Schnittlänge ein solch großer Kraftaufwand erforderlich, dass ein direktes manuelles Verdrehen der Schaltwelle durch eine Bedienperson kaum möglich ist. Vielmehr sind dazu aufwendige Übersetzungsgetriebe oder dgl. Antriebsmittel erforderlich.

In der eigenen älteren DE 32 13 199 C2 wird ein Ladewagen mit einer Schneideinrichtung offenbart, bei der die in den Förderkanal hineinragenden Schneidmesser über Stützklauen, die auf einer Schaltwelle in einzelnen Reihen in achsparalleler Ausrichtung in jeweils unterschiedlicher Zahl angebracht sind, in der Schneidstellung abgestützt werden. Stützkanten am Rücken der Schneidmesser stützen sich dabei unter Bildung eines spitzen Druckwinkels auf den Stützklauen der Schaltwelle ab, so dass beim Auftreten einer übermäßigen Belastung an einem oder mehreren Messern durch eine Verdrehen der Schaltwelle entgegen der Wirkung einer Überlastsicherung die Stützklauen sich aus dem Wirkbereich mit den Stützkanten der Schneidmesser herausbewegen und somit eine Schwenkbewegung der Schneidmesser aus der Schneidstellung in einer Nichtschneidstellung freigeben. Ein Mangel dieser Schneideinrichtung besteht darin, dass beim Auftreten eines Steines oder dgl. Fremdkörper an einem Schneidmesser gleich eine Freigabe aller eingeschalteten Schneidmesser für eine Schwenkbewegung aus der Schneidstellung erfolgt. Eine Absicherung einzelner Schneidmesser gegen Überlast und Beschädigung ist hier also nicht möglich.

Aus der EP 2 653 025 A1 ist eine weitere Schneidvorrichtung bekannt. Diese zeichnet sich aus durch einen den Spanneinheiten der Schneidmesser zugeordneten Auswählmechanismus, der ausgewählte Spanneinheiten von einem inaktiven Zustand, in dem diese ohne Eingriff mit der gemeinsamen Stelleinrichtung sind, in einen aktiven Zustand bewegen kann, in dem diese mit der gemeinsamen Stelleinrichtung in Eingriff stehen. Der gemeinsame Auswählmechanismus dient also dazu, einzelne, oder sämtliche der Spanneinheiten zwischen zwei Zuständen zu bewegen, wobei die gemeinsame Stelleinrichtung abhängig vom Zustand der Spanneinheit nur noch mit ausgewählten Spanneinheiten in Eingriff steht, somit also nur noch diese von der gemeinsamen Stelleinrichtung mit verringertem Kraftaufwand bewegt zu werden brauchen. Das Betätigen des Auswählmechanismus jedoch erfordert durch das Anheben der ausgewählten Spanneinheiten in den aktiven Zustand durch deren Gewichtskraft und den Reibungswiderständen zwischen den Nocken des Auswählmechanismus und den Spiralfedern der Spanneinheiten erhöhten Kraftbedarf. Zusätzlich nachteilig wirkt sich der Verschleiß der Spiralfedern an den Kontaktstellen mit den Nocken auf deren Lebensdauer aus.

Aufgabe der Erfindung ist es daher, eine verbesserte Schneideinrichtung für landwirtschaftliche Erntemaschinen der vorstehend genannten Art zu schaffen, die in einer kompakten Bauform eine zuverlässige Absicherung eines jeden einzelnen Schneidmessers gewährleistet, einfach und kostengünstig herzustellen ist und bei der eine Verstellung der Schnittlänge von einer Bedienperson mit möglichst geringem Kraftaufwand durchführbar ist.

Zur Lösung der gestellten Aufgabe zeichnet sich die Schneideinrichtung der vorstehend genannten Art durch die im kennzeichnenden Teil des Anspruches 1 angegebenen Merkmale aus. Hinsichtlich der weiteren Ausgestaltung der Erfindung wird auf die weiteren Ansprüche verwiesen.

Nach der Erfindung wird eine Schneideinrichtung für landwirtschaftliche Erntemaschinen, wie beispielsweise Ladewagen oder Ballenpressen zum Ernten von landwirtschaftlichem Halm- oder Blattgut mit einem Förderkanal vorgeschlagen, in dem eine Mehrzahl von zumindest in einer Reihe angeordneten, schwenkbar gelagerten und in einer Schneidstellung in den Förderkanal hineinragenden Schneidmessern mit einem mit Förderzinken versehenen und um eine horizontal und quer zur Fahrt- und Arbeitsrichtung ausgerichtete Achse rotierend angetriebenen Förderorgan zur Halmgutzerkleinerung zusammenwirken und mit Stellmitteln zur nachgiebigen Abstützung eines jeden einzelnen Schneidmessers in der Schneidstellung durch die Wirkung einer Spanneinheit sowie mit einer Vorwähleinrichtung zur Vorwahl der Anzahl der Schneidmesser, welche bei Aktivierung einer Messerschalteinrichtung in die Schneidstellung verschwenken, wobei die Vorwähleinrichtung durch Eliminierung von Widerständen durch Stell- und/oder Verbindungsmittel der Messerschalteinrichtung während ihrer Einstellbewegung zur Vorwahl der zu aktivierenden Schneidmesser mit verringertem Kraftaufwand betätigbar ist und in einer Außerbetriebsstellung der Schneideinrichtung (11) auf die Vorwähleinrichtung keinerlei von durch Kraftspeicher ausgeübte Krafteinflüsse wirken, dadurch dass sämtliche Elemente der Messerschalteinrichtung beziehungsweise der Spanneinheit keinen Kontakt zur Vorwähleinrichtung haben. Bei einer Schneideinrichtung für landwirtschaftliche Erntemaschinen wie beispielsweise Ladewagen oder Ballenpressen wird durch die Anwendung der erfindungsgemäßen Merkmale eine Schneideinrichtung geschaffen, bei der insbesondere durch die leichtgängige, komfortable Bedienung der Vorwähleinrichtung zur Auswahl der Messergruppe, welche in eine Eingriffs- und/oder Außereingriffsstellung vorgesehen ist, die Bedienung erheblich erleichtert ist. Außerdem bietet die erfindungsgemäße Schneideinrichtung eine zuverlässige Absicherung eines jeden einzelnen Schneidmessers, wobei der dazu notwendige Einbauraum auf ein Minimum beschränkt bleibt und somit selbst bei Ballenpressen und insbesondere bei Ballenpressen zur Herstellung von quaderförmigen Erntegutballen keine Beeinträchtigungen der Bodenfreiheit eintreten.

Durch die geschickte konstruktive Gestaltung der Vorwähleinrichtung der erfindungsgemäßen Schneideinrichtung ist es gelungen mehr als die bisher aus dem Stand der Technik bekannten maximal 4 Schaltstellungen bereitzustellen. Bei einer vorteilhaften Ausgestaltung der Schneideinrichtung nach der Erfindung sind fünf oder auch sechs Schaltstellungen der Vorwähleinrichtung problemlos möglich. Somit können insbesondere bei einem Schneidwerk mit einer hohen Messeranzahl mehr Messergruppen gebildet werden. Durch diese größere Variationsmöglichkeit ist beim Einsatz nur einer Teilmenge der Schneidmesser ein wesentlich längerer Arbeitseinsatz bis zum Nachschärfen der Messer gegeben.

Es ist zunächst erkannt worden, dass zur Ermöglichung einer größeren Variationsmöglichkeit der Vorwähleinrichtung und deren leichtgängigeren Bedienung die Ausführung der Messerschalteinrichtung mit den verbundenen Elementen zur Messerbetätigung und Absicherung grundlegend überdacht werden muss.

Vorteilhaft ist man zu der Lösung gekommen, dass die Messerschalteinrichtung nicht linear, sondern um eine Schwenkachse schwenkbar die Schaltbewegung zur Verstellung der vorgewählten Messer in die Eingriffs- oder Außereingriffsstellung ausführen muss. Nur dadurch konnte auf kleinstem Raum eine Messerschalteinrichtung verwirklicht werden, die die geforderten Anforderungen erfüllt und darüber hinaus noch weitere Funktionen erfüllt. Die vorteilhaft hydraulisch angetriebene Schwenkbewegung der Schalteinrichtung macht aufwändige, verschleißträchtige Schaltgestänge der bekannten Linearantriebe überflüssig. Die besonders vorteilhafte kinematische Ausgestaltung der Spanneinheit in Verbindung mit der verschwenkbaren Schalteinrichtung ermöglicht, dass sämtliche Elemente der Messerschalteinrichtung beziehungsweise der Spanneinrichtung in einer Betriebsstellung in der alle Schneidmesser ausgeschaltet sind, sich also in der Außerbetriebsstellung befinden, keinen Kontakt zu der Vorwähleinrichtung haben. In dieser Betriebsstellung ist die Vorwähleinrichtung frei von äußeren Einflüssen und Widerständen durch die Messerschalteinrichtung und ist deshalb sehr leicht verstellbar und somit sehr komfortabel für die Bedienperson zu bedienen.

In einer vorteilhaften Ausführung ist die Vorwähleinrichtung als über die Gesamtbreite der Schneideinrichtung reichende mit Nockenscheiben versehende Sechskantwelle ausgeführt. Die Nockenscheiben bieten dabei je nach Stellung den Anschlag für den Spannhebel eines Messers. Durch die Ausgestaltung der Nockenscheiben und deren verdrehte Stellung zueinander auf der Sechskantwelle der Vorwähleinrichtung ergeben sich die verschiedenen Variationsmöglichkeiten der schaltbaren Messergruppen. Besonders vorteilhaft bietet diese Ausführung die Möglichkeit einer späteren Änderung der Variationen.
Weitere Vorteile der schwenkbaren Schalteinrichtung nach der Erfindung ergeben sich dadurch, dass beim Verschwenken der Schalteinrichtung in die Außerbetriebsstellung durch mechanischen Kontakt mit den Spannhebeln, diese und damit auch alle anderen Stell- und Spannmittel in die Außerbetriebsstellung zwangsgeführt verbracht werden. Diese vorteilhafte Zusatzfunktion der Schalteinrichtung erhöht die Funktionssicherheit insbesondere gegenüber schwerkraft- oder federkraftgeführten Ausführungen. Da der Bereich der Schneideinrichtung durch Ablagerung von Schmutz und Erntegutresten sehr belastet ist, kommt es dadurch bei den zuvor genanten Ausführungen häufig zu Störungen.
Die Erfindung wird im Folgenden unter Hinweis auf die beigefügten Figuren eines Ausführungsbeispieles näher erläutert. Daraus ergeben sich auch weitere Einzelheiten und Vorteile der Erfindung.

Es zeigen:
**Fig. 1** eine Gesamtseitenansicht einer Ballenpresse mit einer Schneideinrichtung;
**Fig. 2** eine perspektivische, von umgebenen Bauteilen frei gemachte Ansicht einer erfindungsgemäßen Schneideinrichtung;
**Fig. 3** eine perspektivische Alleindarstellung der Vorwähleinrichtung der Schneideinrichtung nach Fig. 2
**Fig. 4** eine Seitenansicht der Schneideinrichtung nach Fig. 2 in Schnittdarstellung, wobei sich die Schneideinrichtung in Außerbetriebsstellung befindet;
**Fig. 5** eine Seitenansicht wie Fig. 4, wobei jedoch der Übergang von der Außerbetriebsstellung zur Betriebsstellung der Schneideinrichtung dargestellt ist;
**Fig. 6** eine Seitenansicht wie Fig. 4, wobei jedoch die Betriebsstellung der Schneideinrichtung dargestellt ist.

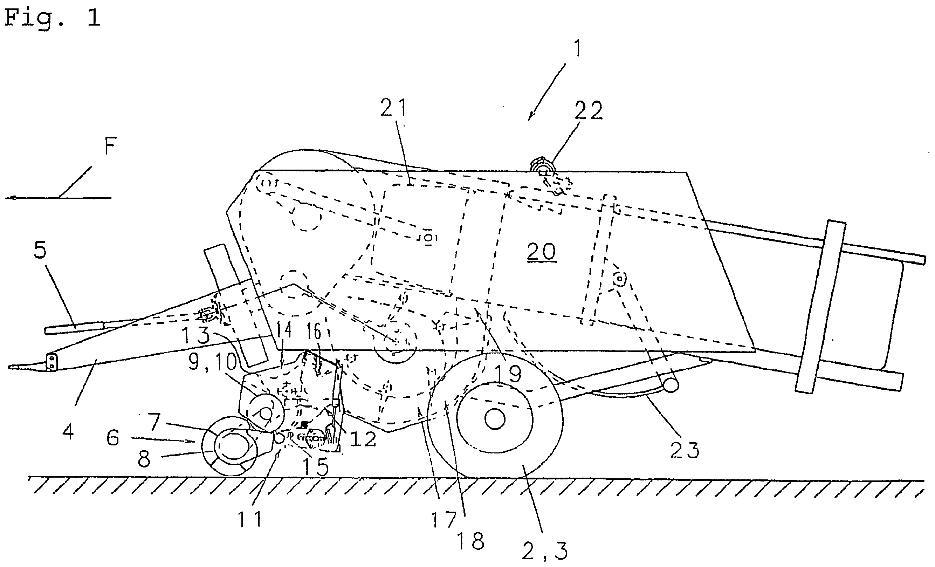

Die in Fig. 1 dargestellte und in Fahrt- und Arbeitsrichtung F über eine Feld- oder Wiesenfläche bewegbare Ballenpresse 1 stützt sich auf Rädern 2, 3 zum Erdboden hin ab und ist über eine Zugdeichsel 4 mit einer nicht dargestellten landwirtschaftlichen Zug- und Arbeitsmaschine verbindbar, wobei der Antrieb von der Zapfwelle der Zug- und Arbeitsmaschine aus über eine Gelenkwelle 5 erfolgt. Die Ballenpresse 1 verfügt über eine Aufnahmeeinrichtung 6, durch die in Schwaden liegendes Erntegut wie beispielsweise Stroh, Heu oder angewelktes Grüngut von der Feld- bzw. Wiesenfläche aufhebbar ist. Die Aufnahmeeinrichtung 6 ist im veranschaulichten Ausführungsbeispiel als eine mit Zinken 7 bestückte Aufnahmetrommel 8 bekannter Bauweise ausgeführt, welcher Querförderschnecken 9, 10 zur Verringerung der Breite des aufgenommenen Erntegutschwades zugeordnet sind. An die Aufnahmetrommel 8 schliesst sich in Flussrichtung des Erntegutes eine Schneideinrichtung 11 an, die im wesentlichen aus einem als Förder- und Schneidrotor ausgeführten Förderorgan 14 mit in einen Förderkanal 12 eingreifenden Förderzinken 13, Schneidmessern 15 und zwischen den Schneidmessern 15 angebrachten Abstreifern 16 besteht. Anschliessend an die Schneideinrichtung 11 wird das Erntegut durch die Wirkung einer als Rechenförderer ausgebildeten Fördervorrichtung 17 durch einen Zuführkanal 18 und eine Presskanaleinlassöffnung 19 von unten in den Presskanal 20 gefördert, indem ein hin und her bewegter Presskolben 21 das Erntegut zu festen quaderförmigen Erntegutballen verdichtet. Beim Erreichen einer vorgewählten Länge der Erntegutballen werden diese mit Bindematerial eingebunden. Dazu sind nur andeutungsweise dargestellte Knotereinrichtungen 22 mit den jeweils zugehörigen Bindenadeln 23 vorhanden. Im dargestellten Ausführungsbeispiel wird die erfindungsgemäße Schneideinrichtung 11 an einer Ballenpresse zur Herstellung von quaderförmigen Erntegutballen verwendet. Gleichermaßen ist es aber auch denkbar, die erfindungsgemäße Schneideinrichtung 11 an einer Ballenpresse zur Herstellung von Rundballen oder an einem Selbstladewagen einzusetzen.

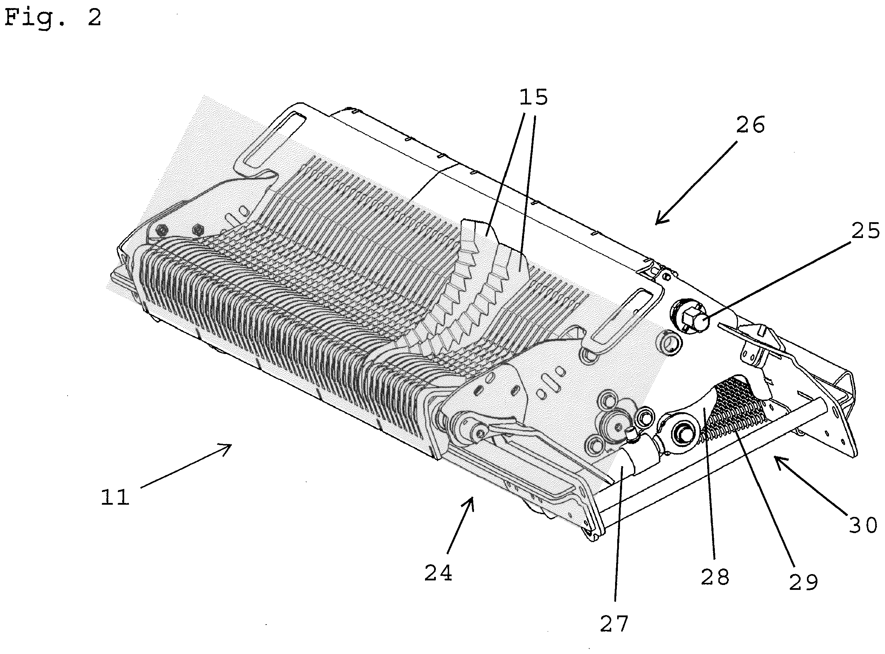

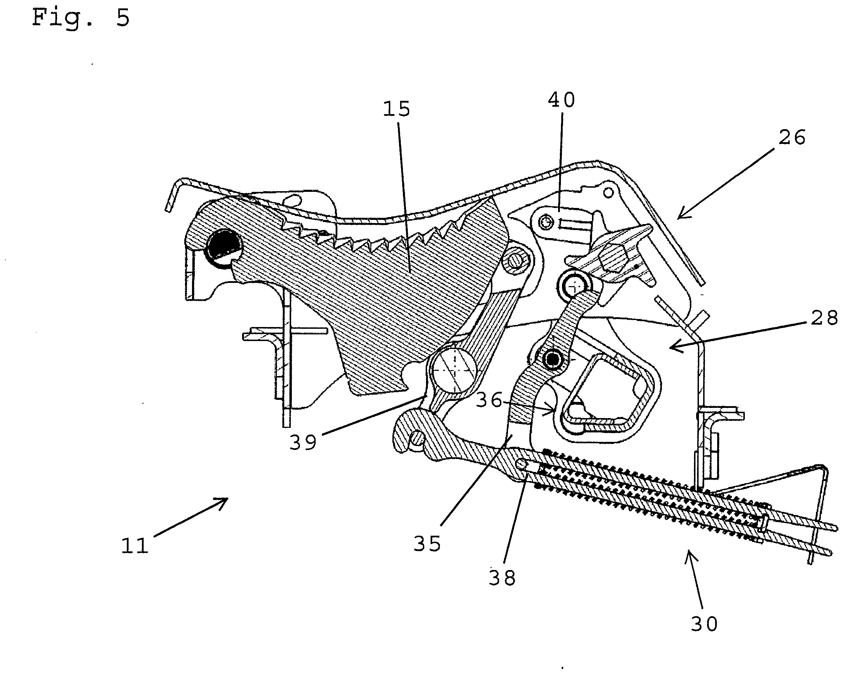

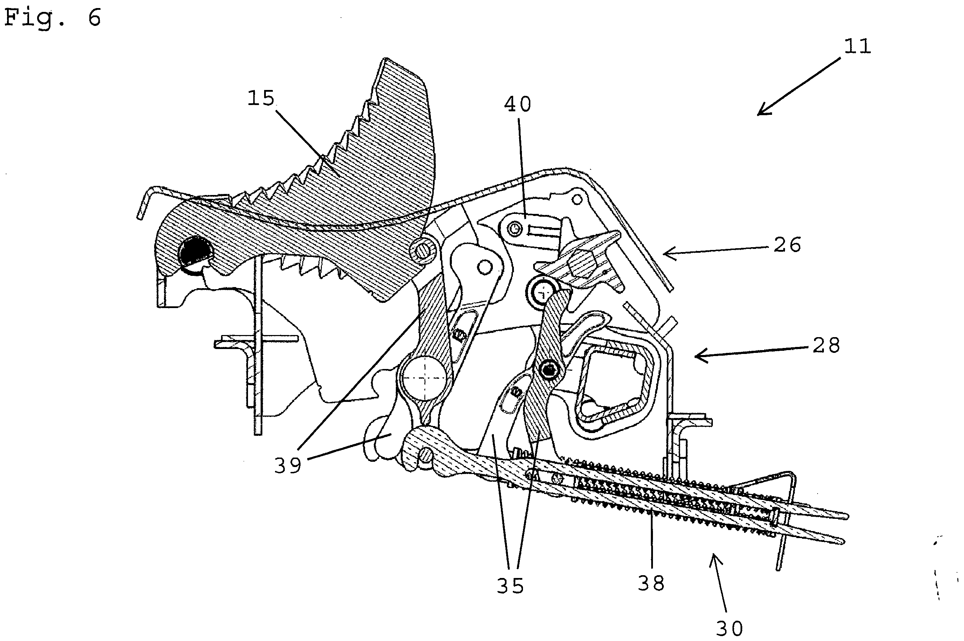

In Fig. 2 ist in einer perspektivischen, vergrößerten Darstellung die Schneideinrichtung 11 nach der Erfindung näher veranschaulicht. Die gesamte erfindungsgemäße Schneideinrichtung 11 des Ausführungsbeispiels ist vorteilhaft auf einen Rahmen 24 aufgebaut, der in Führungen der Ballenpresse 1 geführt zu Wartungszwecken seitlich aus dieser herausgezogen werden kann. Deutlich erkennbar sind zwei Schneidmesser 15, die hier zur Verdeutlichung einmal in ganz herausgeschwenkter Betriebsstellung und einmal in einer Zwischenstellung dargestellt sind. Die weiteren Schneidmesser 15 dieser mit sehr vielen Messern ausgestatteten Schneideinrichtung 11 befinden sich in der eingeschwenkten Außerbetriebsstellung. Der Ansatz der Sechskantwelle 25 für den Betätigungshebel der Vorwähleinrichtung 26 ist ebenso deutlich erkennbar wie der Stellzylinder 27 der Messerschalteinrichtung 28 und die Spiralfedern 29 der Spanneinheiten 30.

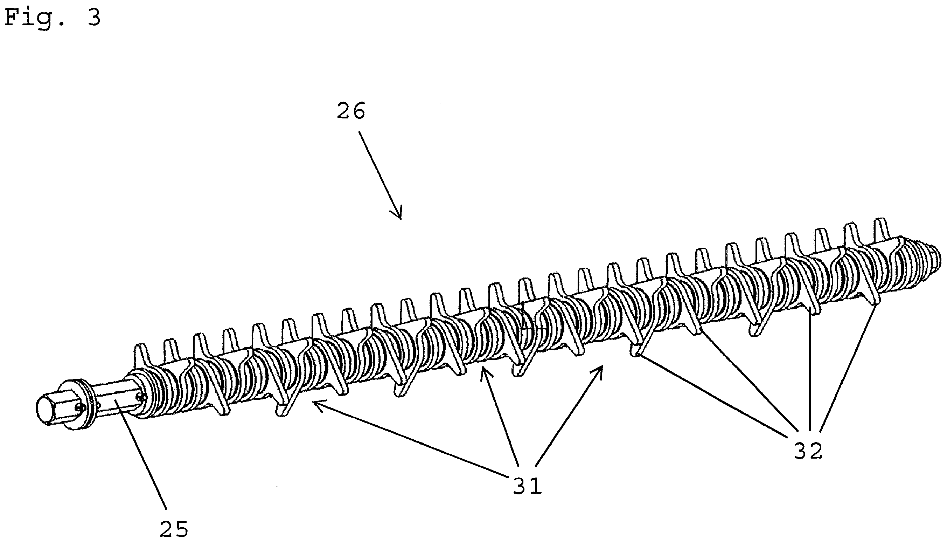

Fig. 3 zeigt im Detail die Vorwähleinrichtung 26, bestehend aus auf einer Sechskantwelle 25 aufgeschobenen Schaltscheiben 31, die in ihrer Anzahl und dem Abstand genau den Schneidmessern 15 entsprechen und sich somit über die gesamte Breite der Schneideinrichtung 11 erstrecken. Die Schaltscheiben weisen Anschlagnocken 32 auf, auf die später noch eingegangen wird.

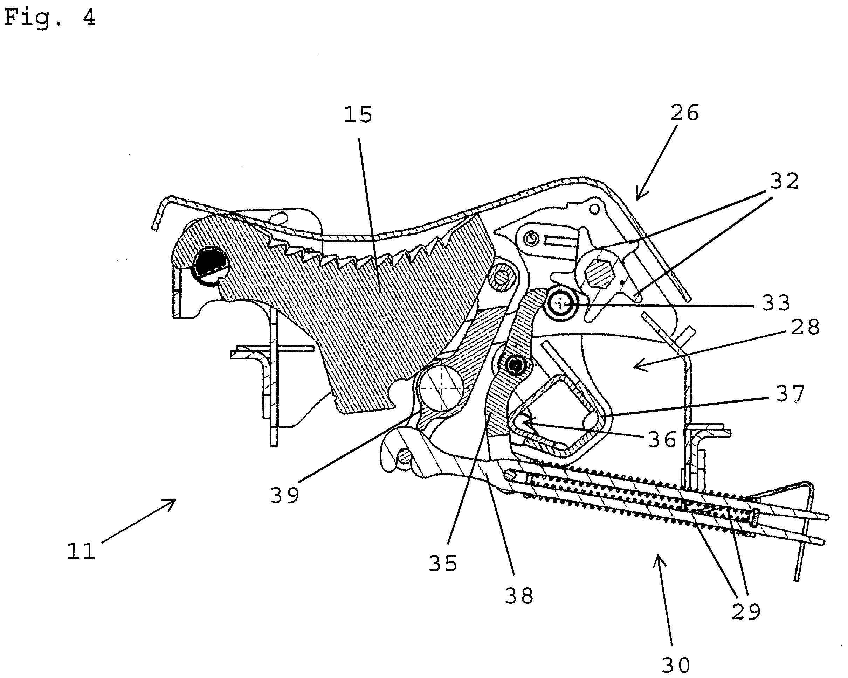

Fig. 4 zeigt in Seitenansicht eine Schnittdarstellung der erfindungsgemäßen Schneideinrichtung 11. In dieser Darstellung sind die verschiedenen Baugruppen und Bauteile der Schneideinrichtung besonders gut detailliert erkennbar. Die Fig. 4 stellt die Schneideinrichtung 11 in ihrer Außerbetriebsstellung dar. Die Messerschalteinrichtung 28 ist dazu um ihre Schwenkachse 33 durch Einfahren des Stellzylinders 27 nach unten geschwenkt, wodurch sich gleichzeitig die Schwenkachse 34 der Spannhebel 35 derart verlagert, dass das obere freie Ende der Spannhebel 35 außerhalb des Wirkbereichs (Umkreisdurchmessers) der Anschlagnocken 32 liegt. Somit kann in dieser Betriebsstellung die Vorwähleinrichtung 26 leicht in eine Richtung verdreht werden, ohne das durch die Spannhebel 35 auf sie wirkende Kräfte, beispielsweise von den Spiralfedern 29 der Spanneinheiten 30 überwunden werden müssen.
Während des Verschwenkens der Messerschalteinrichtung 28 in die Außerbetriebsstellung läuft die Anlagekante 36 des Querbalkens 37 der Messerschalteinrichtung 28 gegen die Spannhebel 35 im Bereich unterhalb der Schwenkachse 34 und bewirkt dadurch zwangsweise durch die Verbindung der Spannhebel 35 mit den Gabeln 38 der Spanneinheiten 30 das Zurückschwenken der Stellhebel 39 und damit das Abtauchen der Schneidmesser 15 in ihre inaktive Stellung.
Die weiteren Fig. 5 und 6 zeigen in gleicher Ansicht wie Fig. 4 die erfindungsgemäße Schneideinrichtung 11 des Ausführungsbeispiels in weiteren Betriebsstellungen.
Fig. 5 stellt eine Zwischenstellung während des Schaltvorgangs der Messerschalteinrichtung 28 von der Außerbetriebsstellung in die Betriebsstellung der Schneideinrichtung 11 dar. Die Messerschalteinrichtung 28 ist so weit um die Schwenkachse 33 entgegen dem Uhrzeigersinn verschwenkt, dass die Spannhebel 35, denen ein Anschlagnocken 32 einer Schaltscheibe 31 durch Vorwahl entgegensteht, an diesem zur Anlage kommen. Beim weiteren Verschwenken der Messerschalteinrichtung 28 verlagert sich die Schwenkachse 34 der Spannhebel 35 ebenfalls weiter und bewirkt bei den Spannhebeln 35, die mit ihrem oberen Ende an einen Anschlagnocken 32 anliegen, eine Verlagerung ihres unteren, mit einer Gabel 38 einer Spanneinheit 30 verbundenen Endes, wodurch diese Spanneinheit 30 vorgespannt wird und das ihr zugeordnete Schneidmesser 15 über den verbundenen Stellhebel 39 aktiv geschaltet wird.
Die Spannhebel 35, denen kein Anschlagnocken 32 der Vorwähleinrichtung zugeordnet ist, laufen während dieses Vorgangs unterhalb der Vorwähleinrichtung 26 ins Leere und verursachen somit kein Vorspannen einer Spanneinheit.
Gegen ein Verdrehen der Vorwähleinrichtung 26 stützt sich diese gegen eine schwenkbare Arretierungsleiste 40 ab, die beim Verdrehen der Vorwähleinrichtung 26 im Uhrzeigersinn zur Vorwahl der Messergruppen jeweils von den Anschlagnocken 32 angehoben wird und durch Schwerkraft wieder ihre Arretierstellung einnimmt.
In Fig. 6 ist die Endstellung des Schaltvorgangs zur Aktivierung der vorgewählten Schneidmesser 15 dargestellt. Die ausgewählten Schneidmesser 15 befinden sich in der Betriebsstellung und werden durch Federdruck der entsprechenden Spanneinheit 30 über den zugeordneten Stellhebel 39 dort gehalten. Deutlich sind in Fig. 6 die Stellelemente 35, 39 der nicht aktivierten Schneidmesser 15 in ihrer Außerbetriebsstellung zu erkennen. Vorteilhaft an der erfindungsgemäßen Schneideinrichtung 11 ist zu erkennen, dass die nicht aktivierten Spanneinheiten 30 in der Betriebsstellung der Schneideinrichtung 11 völlig unbelastet bleiben. Ebenfalls wird deutlich wie sich die, gleichzeitig mehrere Funktionen umfassende Schwenkbewegung der Messerschalteinrichtung 28 besonders vorteilhaft auf die kompakte Bauform der erfindungsgemäßen Schneideinrichtung auswirkt.

## Patentansprüche

1. Schneideinrichtung für landwirtschaftliche Erntemaschinen, wie beispielsweise Ladewagen oder Ballenpressen zum Ernten von landwirtschaftlichem Halm- oder Blattgut mit einem Förderkanal (12), in dem eine Mehrzahl von zumindest in einer Reihe angeordneten, schwenkbar gelagerten und in einer Schneidstellung in den Förderkanal (12) hineinragenden Schneidmessern (15) mit einem mit Förderzinken (13) versehenen und um eine horizontal und quer zur Fahrt- und Arbeitsrichtung (F) ausgerichtete Achse rotierend angetriebenen Förderorgan (14) zur Halmgutzerkleinerung zusammenwirken und mit Stellmitteln zur nachgiebigen Abstützung eines jeden einzelnen Schneidmessers (15) in der Schneidstellung durch die Wirkung einer Spanneinheit (30) sowie mit einer Vorwähleinrichtung (26) zur Vorwahl der Anzahl der Schneidmesser (15), welche bei Aktivierung einer Messerschalteinrichtung (28) in die Schneidstellung verschwenken, wobei die Vorwähleinrichtung (26) durch Eliminierung von Widerständen durch Stell- und/oder Verbindungsmittel der Messerschalteinrichtung (28) während ihrer Einstellbewegung zur Vorwahl der zu aktivierenden Schneidmesser (15) mit verringertem Kraftaufwand betätigbar ist, **dadurch gekennzeichnet, dass** in einer Außerbetriebsstellung der Schneideinrichtung (11) auf die Vorwähleinrichtung (26) keinerlei von durch Kraftspeicher ausgeübte Krafteinflüsse wirken, dadurch dass sämtliche Elemente der Messerschalteinrichtung (28) beziehungsweise der Spanneinheit (30) keinen Kontakt zur Vorwähleinrichtung (26) haben.

2. Schneideinrichtung für landwirtschaftliche Erntemaschinen nach Anspruch 1, **dadurch gekennzeichnet, dass** die Messerschalteinrichtung (28) bei Aktivierung eine Schwenkbewegung ausführt.

3. Schneideinrichtung für landwirtschaftliche Erntemaschinen nach Anspruch 1, **dadurch gekennzeichnet, dass** die Messerschalteinrichtung (28) bei Aktivierung während ihres Bewegungsablaufs zumindest zeitweise durch mechanischen Kontakt mit Elementen der Schneideinrichtung (11) zusätzliche zwangsgeführte Funktionen ausübt.

4. Schneideinrichtung für landwirtschaftliche Erntemaschinen nach mindestens einen der vorhergehenden Ansprüche, **dadurch gekennzeichnet, dass** die Vorwähleinrichtung (26) zumindest fünf Schaltstellungen aufweist.

5. Schneideinrichtung für landwirtschaftliche Erntemaschinen nach mindestens einen der vorhergehenden Ansprüche, **dadurch gekennzeichnet, dass** die Vorwähleinrichtung (26) in der Art einer Nockenschaltwelle ausgeführt ist.

6. Schneideinrichtung für landwirtschaftliche Erntemaschinen nach Anspruch 5, **dadurch gekennzeichnet, dass** die Vorwähleinrichtung (26) für jedes Schneidmesser (15) der Schneideinrichtung (11) Vorwählmittel aufweist.

7. Schneideinrichtung für landwirtschaftliche Erntemaschinen nach Anspruch 5 und 6, **dadurch gekennzeichnet, dass** die Vorwähleinrichtung (26) für jedes Schneidmesser (15) der Schneideinrichtung (11) eine Schaltscheibe (31) mit Anschlagnocken (32) aufweist.

8. Schneideinrichtung für landwirtschaftliche Erntemaschinen nach Anspruch 7, **dadurch gekennzeichnet, dass** die Schaltscheiben (31) der Vorwähleinrichtung (26) auf einer Profilwelle (25) variabel gelagert sind.

9. Schneideinrichtung für landwirtschaftliche Erntemaschinen nach mindestens einen der vorhergehenden Ansprüche, **dadurch gekennzeichnet, dass** der Abstand zwischen benachbarten Schneidmessern (15) und damit die kürzeste zu erreichende theoretische Schnittlänge des Ernteguts in einem Bereich von 15 bis 45 mm liegt.

10. Schneideinrichtung für landwirtschaftliche Erntemaschinen nach mindestens einen der vorhergehenden Ansprüche, **dadurch gekennzeichnet, dass** der Abstand zwischen benachbarten Schneidmessern (15) und damit die kürzeste zu erreichende theoretische Schnittlänge des Ernteguts vorzugsweise in einem Bereich von 15 mm bis 25 mm liegt.

## Claims

1. Cutting device for agricultural harvesting machines, such as loading vehicles or balers for harvesting agricultural stalk or leaf material, comprising a conveying channel (12), in which a plurality of cutting blades (15) that are arranged at least in a row, pivotally mounted and project into the conveying channel (12) in a cutting position cooperate with a conveying member (14) that is provided with conveying tines (13) and is rotatably driven about an axis that is oriented horizontally and transversely to the travel and operating direction (F), for the purpose of shredding stalk material, and comprising adjustment means for resiliently supporting each individual cutting blade (15) in the cutting position by means of the action of a tensioning unit (30), and comprising a preselection device (26) for preselecting the number of cutting blades (15) that pivot into the cutting position when a blade switching device (28) is activated, the preselection unit (26) being actuatable with reduced effort by eliminating resistance from adjustment and/or connection means of the blade switching device (28) during the adjusting movement thereof for preselecting the cutting blades (15) to be activated, **characterised in that** no forces exerted by energy accumulators act on the preselection device (26) in the inoperative position of the cutting device (11), such that none of the elements of the blade switching device (28) or tensioning unit (30) are in contact with the preselection device (26).

2. Cutting device for agricultural harvesting machines according to claim 1, **characterised in that** the blade switching device (28) performs a pivoting movement when activated.

3. Cutting device for agricultural harvesting machines according to claim 1, **characterised in that**, when activated, the blade switching device (28) carries out additional forcibly imposed functions at least temporarily during the movement sequence thereof by means of mechanical contact with elements of the cutting device (11).

4. Cutting device for agricultural harvesting machines according to at least one of the preceding claims, **characterised in that** the preselection device (26) comprises at least five switching positions.

5. Cutting device for agricultural harvesting machines according to at least one of the preceding claims, **characterised in that** the preselection device (26) is designed in the manner of a cam selector shaft.

6. Cutting device for agricultural harvesting machines according to claim 5, **characterised in that** the preselection device (26) comprises preselection means for each cutting blade (15) of the cutting device (11).

7. Cutting device for agricultural harvesting machines according to claims 5 and 6, **characterised in that** the preselection device (26) comprises a switching disc (31), comprising stop cams (32), for each cutting blade (15) of the cutting device (11).

8. Cutting device for agricultural harvesting machines according to claim 7, **characterised in that** the switching discs (31) of the preselection device (26) are mounted in a variable manner on a profiled shaft (25).

9. Cutting device for agricultural harvesting machines according to at least one of the preceding claims, **characterised in that** the distance between adjacent cutting blades (15) and thus the shortest theoretically achievable cutting length of the harvested material is in a range of from 15 to 45 mm.

10. Cutting device for agricultural harvesting machines according to at least one of the preceding claims, **characterised in that** the distance between adjacent cutting blades (15) and thus the shortest theoretically achievable cutting length of the harvested material is preferably in a range of from 15 to 25 mm.

## Revendications

1. Dispositif de coupe destiné à des moissonneuses agricoles telles que, par exemple, des véhicules chargeurs ou des tresses à balles permettant de récolter des plantes agricoles à tiges ou à feuilles, comprenant un canal de transfert (12) dans lequel un ensemble de lames de coupe (15) disposées sur au moins une rangée, montées mobiles en pivotement et pénétrant dans le canal de transfert (12) dans une position de coupe, coopèrent pour permettre le broyage des plantes à tiges avec un organe de transfert (14) équipé de dents de transfert (13) et entraîné en rotation autour d'un axe horizontal et orienté transversalement à la direction de déplacement et de travail (F), ainsi qu'avec des moyens de réglage permettant l'application souple de chacune des lames de coupe (15) individuelles dans la position de coupe suite à l'action d'une unité de serrage (30), et avec un dispositif de présélection (26) permettant la présélection du nombre de lames de coupe (15) qui pivotent dans la position de coupe lors de l'activation d'un dispositif de commutation de lames (28), le dispositif de présélection (26) pouvant être actionné avec une force diminuée suite à l'élimination de résistances par des moyens de réglage et/ou de liaison du dispositif de commutation des lames (28) pendant le mouvement de réglage permettant de présélectionner les lames de coupe (15) à activer,
**caractérisé en ce que**
dans la position de non fonctionnement du dispositif de coupe (11), aucune force exercée par un accumulateur de force n'agit sur le dispositif de présélection (26), de sorte que la totalité des éléments du dispositif de commutation des lames (28) ou de l'unité de serrage (30) n'ait aucun contact avec le dispositif de présélection (26).

2. Dispositif de coupe destiné à des moissonneuses agricoles conforme à la revendication 1,
**caractérisé en ce que**
lors de son activation le dispositif de commutation des lames (28) effectue un mouvement de pivotement.

3. Dispositif de coupe destiné à des moissonneuses agricoles conforme à la revendication 1,
**caractérisé en ce que**
lors de son activation le dispositif de commutation des lames (28) exerce pendant son déplacement au moins par intermittences des fonctions supplémentaires à guidage forcé par contact mécanique avec des éléments du dispositif de coupe (11).

4. Dispositif de coupe destiné à des moissonneuses agricoles conforme à au moins l'une des revendications précédentes,
**caractérisé en ce que**
le dispositif de présélection (26) a au moins cinq positions de commutation.

5. Dispositif de coupe destiné à des moissonneuses agricoles conforme à au moins l'une des revendications précédentes,
**caractérisé en ce que**
le dispositif de présélection (26) est réalisé sous la forme d'un arbre de commutation à cames.

6. Dispositif de coupe destiné à des moissonneuses agricoles conforme à la revendication 5,
**caractérisé en ce que**
le dispositif de présélection (15) comporte des moyens de présélection (26) pour chaque lame de coupe du dispositif de coupe (11).

7. Dispositif de coupe destiné à des moissonneuses agricoles conforme à la revendication 5,
**caractérisé en ce que**
le dispositif de présélection (26) comporte un disque de commutation (31) équipé de cames formant butée (32) pour chacune des lames de coupe (15) du dispositif de coupe (11).

8. Dispositif de coupe destiné à des moissonneuses agricoles conforme à la revendication 7,
**caractérisé en ce que**
les disques de commutation (31) du dispositif de présélection (26) sont montés de manière mobile sur un arbre profilé (25).

9. Dispositif de coupe destiné à des moissonneuses agricoles conforme à au moins l'une des revendications précédentes,
**caractérisé en ce que**
la distance entre des lames de coupe (15) voisines et, par suite, la longueur de coupe théorique la plus courte des plantes de récolte pouvant être obtenue est située dans une plage de 15 à 45 millimètres.

10. Dispositif de coupe destiné à des moissonneuses agricoles conforme à au moins l'une des revendications précédentes,
**caractérisé en ce que**
la distance entre des lames de coupe (15) voisines et, par suite la longueur de coupe théorique la plus courte des plantes de récolte pouvant être obtenue est de préférence située dans une plage de 15 mm à 25 mm.
